# EUROPÄISCHE PATENTSCHRIFT

(11) **EP 1 388 575 B1**
(45) Veröffentlichungstag und Bekanntmachung des Hinweises auf die Patenterteilung: **25.10.2006**
(21) Anmeldenummer: 03018025.1
(22) Anmeldetag: 07.08.2003
(51) Int. Cl.: C09D 9/00

(54) **Abbeizmittel**
Stripping composition
Composition de décapage

(30) Priorität: 09.08.2002 DE 10236512
(43) Veröffentlichungstag der Anmeldung: 11.02.2004
(73) Patentinhaber: Scheidel GmbH & Co. KG, 96114 Hirschaid (DE)
(72) Erfinder: Reinecke, Werner, 96155 Buttenheim (DE)
(74) Vertreter: Thiel, Christian

(56) Entgegenhaltungen:
- WO-A-01/05898
- US-A- 5 728 666
- US-A- 5 980 626
- PATENT ABSTRACTS OF JAPAN vol. 1999, no. 13, 30. November 1999 (1999-11-30) & JP 11 209665 A (NIPPON CB CHEMICAL KK), 3. August 1999 (1999-08-03)

## Beschreibung

Die Erfindung betrifft eine chlorkohlenwasserstofffreie Abbeizzubereitung in dickflüssiger, pastöser oder geleeartiger Form, welche wenigstens ein übliches Tensid mit wenigstens einem üblichen Verdickungsmittel in einem Lösungsmittelgemisch aufweist.

Zubereitungen zum Lösen von Lackschichten und Beschichtungen sind vielfach bekannt. Ursprünglich wurden solche Zubereitungen, regelmäßig auf Basis von Chlorkohlenwasserstoffen, vorzugsweise Dichlormethan hergestellt. Aufgrund der Toxizität von chlorierten Kohlenwasserstoffen und aus Gründen des Umweltschutzes sind derartige Zubereitungen nicht mehr ohne weiteres einsetzbar. Es werden daher seit einiger Zeit erhebliche Anstrengungen unternommen, chlorkohlenwasserstofffreie Zubereitungen zu entwickeln, die den chlorkohlenwasserstoffhaltigen Zubereitungen an Wirksamkeit nahe kommen.

Weitgehend universell wirken Abbeizmittel, die seit Jahrzehnten nach dem gleichen Grundprinzip hergestellt wurden, nämlich aus Lösemitteln, vorwiegend Dichlormethanzumischungen von Alkoholen, Estern, Ketonen und anderen, Verdickungsmitteln, vorwiegend Zellulose, Wachse (meist Paraffin), und Netzmitteln zur Erreichung der Abwaschbarkeit mit Wasser.

Es sind mit Triethanolamin basisch eingestellte Entschichtungsmittel auf Basis von DMSO und Ethylisoamylketon bekannt, denen als weitere Komponente ein Ether oder Ester zugesetzt ist. Die basische Einstellung fördert die Wirksamkeit, führt aber gleichzeitig zu einer Verminderung der Lagerstabilität. Ferner sind neutrale, saure und basische Abbeizmittel auf Basis von Dioxolan bekannt, die als weitere, die Abbeizwirkung fördernde Komponente Methylal enthalten. Die Formaldehyd Formulierungen können mit Zellulosederivaten verdickt sein und auch Netzmittel und Verdunstungsverzögerer enthalten.

Des weiteren ist aus der WO 01/05898 ein Abbeizmittel bekannt, welches insbesondere einen aromatischen Alkohol, Äpfelsäure und Wasser enthält und besondere Eigenschaften aufweist, wie beispielsweise Korrosionsfreiheit und Ungiftigkeit. Diese enthält eine Hydroxycarbonsäure.

Auch aus der US-A-5,728,666 ist eine Abbeizzubereitung mit Hydroxycarbonsäure beschrieben.

Alle diese Abbeizmittel unterliegen aber Einschränkungen, was ihr Abbeizverhalten anbetrifft.

Der Erfindung liegt daher die Aufgabe zugrunde, eine alternative CKW-freie Abbeizzubereitung bereitzustellen, die hinsichtlich ihrer Abbeizwirkung verbessert ist und den Eigenschaften der äpfelsäurehaltigen Produkte zumindest nahe kommen soll.

Zur Lösung dieser Aufgabe schlägt die Erfindung, ausgehend von einer Abbeizzubereitung der eingangs genannten Art eine Zubereitung vor, die 25 Gew.-% bis 60 Gew.-% Wasser, 2,5 Gew.-% bis 50 Gew.-% aromatischen Alkohol, 0,2 Gew.-% bis 10 Gew.-% Peroxide und 0,5 Gew.-% bis 20 Gew.-% einer Dicarbonsäure der Formel HOOC-(CH₂)n-COOH enthält, wobei n für 0,1 oder 2 steht.

Alle Gewichtsangaben beziehen sich auf die gesamte Zubereitung.

Die erfindungsgemäße Abbeizzubereitung ist frei von chlorhaltigen Lösungsmitteln und ist daher umweltfreundlich und benutzerfreundlich. Sie ist des weiteren nicht korrosiv, nicht entflammbar, nicht toxisch, besitzt eine geringere Verdunstungstendenz und ist zudem biologisch vollständig abbaubar.

Vorzugsweise enthält sie Mono-, Di- und/oder Trihydroxycarbonsäure mit der Maßgabe, daß der Gehalt an Mono-, Di- und/oder Trihydroxycarbonsäure zusammen mit der Dicarbonsäure der Formel HOOC-(CH₂)ₙ-COOH mit n = 0,1 oder 2 0,5 bis 20 Gew.-% beträgt.

Von den Hydroxycarbonsäuren sind Glykolsäure und Gerbsäure bevorzugt. Im allgemeinen kommen Mono-, Di-, und Trihydroxycarbonsäuren mit bis zu 10, vorzugsweise mit bis zu 70 Atomen in Frage.

Vorzugsweise handelt es sich bei der Dicarbonsäure um Malonsäure mit der Formel HOOC-CH₂-COOH. Es hat sich herausgestellt, daß Malonsäure die Farbschicht bzw. Beschichtung gut anlöst, zumindest ebenso gut wie bei dem Abbeizmittel aus der WO 01/05898, und daß gleichzeitig die Entfernung der angelösten Beschichtung erleichtert wird. Ein Vorteil von Malonsäure ist, daß sie in den erfindungsgemäßen Zusammensetzungen gegenüber Metalloberflächen nicht mehr korrodierend wirkt, so daß sich die erfindungsgemäße Abbeizzubereitung auch für derartige Oberflächen gut eignet, insbesondere in Kombination mit den oben genannten Hydroxycarbonsäuren. Hydroxy- und Dicarbonsäuren wirken als Aktivatoren für die erfindungsgemäßen Peroxid enthaltenden Mittel.

Bei dem aromatischen Alkohol handelt es sich insbesondere um Benzylalkohol, wobei dessen Menge vorzugsweise 10 Gew.-% bis 35 Gew.-% beträgt. Es können hierbei auch andere aromatische Alkohole in Frage kommen, wie beispielsweise Phenoxypropanol, Phenoxyethanol und deren Kombination.

Vorzugsweise wird Wasserstoffperoxid eingesetzt, wobei dieses in Form einer 10 %igen bis 50 %igen wäßrigen Lösung zugesetzt wird, besonders bevorzugt 35 %ig. Der Anteil in der Zubereitung bezieht sich auf das Peroxid selbst.

Zusätzlich kann die Zubereitung weitere wassermischbare Lösemittel enthalten, vorzugsweise in einer Menge von bis zu 10 Gew.-% und insbesondere in einer Menge von 1 bis 5 Gew.-%. Solche wassermischbaren Lösemittel sind insbesondere Glykole, bevorzugt Propylenglykol, wie auch DMSO und NMP.

Die erfindungsgemäßen Zubereiten enthalten vorzugsweise 5 bis 30 Gew.-% teilwasserlösliche und/oder wasserunlösliche Lösemittel. Als Lösemittel kommen insbesondere Solvent Naphtha und Diisopropylnaphthalin in Frage, insbesondere in einer Menge von 5 bis 15 Gew.-%. Weitere geeignete Lösemittel sind höhere Ester, wie Alkyllaurate, insbesondere lsopropyllaurat, Ethyllaurat und Methyllaurat. Weiterhin kommen Benzylcarboxylate in Frage, insbesondere Benzylformiat und Benzylacetat. Generell können die Niederalkylester (Methyl-, Ethyl-, Propyl-, lsopropyl-, Butylester) von gesättigten Fettsäuren einer Kettenlänge von bis zu 16 C-Atomen eingesetzt werden. Derartige teilwassermischbare Lösemittel befinden sich in der erfindungsgemäßen Zubereitung teilweise in der wäßrigen, teilweise in der organischen Phase.

Diisopropylnaphthalin ist ein toxikologisch unbedenklicher Stoff, der, im Gegensatz zu Solventnaphtha, nahezu geruchlos ist. Mit diesen und/oder höheren Fettsäureester, insbesondere lsopropyllaurat, Ethylhexyllaurat, lassen sich fast geruchslose Abbeizer herstellen. Grundsätzlich sind auch Methylester C6-C14-Fettsäuren geeignet, jedoch sind diese nicht geruchlos.

Es hat sich gezeigt, daß insbesondere übliche aromatische Kohlenwasserstoffe und Fettsäureester, insbesondere die C1-C8-Alkylester von C6-C14-Fettsäuren durch ihr sehr guten Diffusionsvermögen zur Abbeizwirkung beitragen.

Es ist festzuhalten, daß die erfindungsgemäßen Zubereitungen einphasig ausgebildet sein können, vorzugsweise aber aus einer wäßrigen und einer organischen Phase bestehen, wobei sich die organische Phase emulgiert in der wäßrigen Phase befindet.

Als wasserunlösliches Lösemittel wird insbesondere Solvent Naphtha verwandt.

Vorzugsweise werden Trihydroxycarbonsäure, insbesondere Gerbsäure und/oder Tannin, in einer Menge von 0,1 bis 3 Gew.-% der Abbeizzubereitung beigemengt. Die wässrige Tensidlösung enthält insbesondere 0,5 bis 4 Gew.-% Verdickungsmittel. Dabei kommen insbesondere Hydroxypropylcellulose, Bentonite, Hydroxypropylmethylcellulose, Pektine, Tannin oder Xanthan, jeweils allein oder in Kombination, zur Anwendung.

Des weiteren enthält die wäßrige Tensidlösung 0,5 bis 5 Gew.-% Tenside, vorzugsweise Polysorbitanester und/oder Alkylsulfosuccinate.

Es können auch andere herkömmliche Netzmittel und Verdickungsmittel als die genannten in Frage kommen. Üblicherweise ist die Abbeizerzubereitung auf einen sauren pH-Wert eingestellt; zur sauren Einstellung wird in der Regel die zugesetzte organische Säure verwandt, gegebenenfalls zusätzlich Zitronensäure.

Zur Verlangsamung der Verdunstung von Lösungsmitteln werden Wachsemulsionen beigemengt. Die Wirkung der erfindungsgemäßen Abbeizzubereitung beruht auf dem Zusammenwirken der einzelnen Lösemittelkomponenten in den genannten Mengen mit Dicarbonsäure. Die Wachsmenge kann bis zu 2 Gew.-% betragen, in der Regel aber 0,5 bis 1 Gew.-%.

Weiterhin können übliche Korrosionsinhibitoren und Stabilisatoren in der Zubereitung enthalten sein.

Die Erfindung wird durch die nachfolgenden Beispiele näher beschrieben.

### Beispiel 1

Zur Herstellung einer besonders bevorzugten erfindungsgemäßen Zusammensetzungen werden die folgenden Komponenten zusammengerührt:

| | |
|---|---|
| 9 Gew.-% | Solvent Naphtha |
| 29,5 Gew.-% | Benzylalkohol |
| 2 Gew.-% | Propylenglykol |
| 0,2 Gew.-% | 2-Mercapto-benzothiazol |
| 0,5 Gew.-% | (Methyl-)Hydroxypropylcellulose |
| 0,5 Gew.-% | Xanthan |
| 1 Gew.-% | Bentonite |
| 2 Gew.-% | Tagat V 20 |
| 1 Gew.-% | Polysorbitanester |
| 35,2 Gew.-% | Wasser |
| 5 Gew.-% | Malonsäure |
| 0,2 Gew.-% | Trihydroxycarbonsäure (Tannin/Gerbsaure) |
| 12,9 Gew.-% | Wasserstoffperoxid (35 %ig) |
| 1 Gew.-% | übliche Wachsemulsion |

Nach der Homogenisierung erhält man eine Formulierung, die beim Abbeizen je nach Art der Beschichtung und Untergrund eine Lösung in 0,5 bis 36 Stunden bewirkt. Die Formulierung hat sich als sehr gut geeignet zum Entschichten von Metalloberflächen im industriellen Bereich erwiesen und kann vorteilhaft zum Entfemen von Anti-Fouling-Anstrichen an Schiffsrümpfen eingesetzt werden. Weitere Einsatzgebiete sind Außenanstiche aller Art.

### Beispiel 2

Eine weitere nicht-erfindungsgemäße Zubereitung hatte die folgende Zusammensetzung:

| | |
|---|---|
| 9 Gew.-% | Solvent Naphtha |
| 29,5 Gew.-% | Benzylalkohol |
| 2 Gew.-% | Propylenglykol |
| 0,2 Gew.-% | 2-Mercapto-benzothiazol |
| 0,5 Gew.-% | (Methyl-)Hydroxypropylcellulose |
| 0,5 Gew.-% | Xanthan |
| 1 Gew.-% | Bentonite |
| 2 Gew.-% | Tagat V 20 |
| 1 Gew.-% | Polysorbitanester |
| 35,2 Gew.-% | Wasser |
| 5 Gew.-% | Hydroxycarbonsäure (Glykolsäure 57 %ig) |
| 0,2 Gew.-% | Trihydroxycarbonsäure (Tannin/Gerbsäure) |
| 12,9 Gew.-% | Wasserstoffperoxid (35 %ig) |
| 1 Gew.-% | übliche Wachsemulsion |

### Beispiele 3 bis 5

Weitere nicht-erfindungsgemäße Zubereitungen hatten folgende Zusammensetzungen:

### Beispiele:

| 3 | 4 | 5 | |
|---|---|---|---|
| 23 | | 8 | Gew.-% Isopropyllaurat |
| | 9 | | Gew.-% Diisopropylnaphthalin |
| 4,5 | 30 | 30 | Gew.-% Benzylalkohol |
| 5 | | | Gew.-% Benzylformiat |
| 5 | | 5 | Gew.-% Dimethylsulfoxid |
| | 2 | | Gew.-% Propylenglykol |
| 0,2 | 0,2 | 0,2 | Gew.-% 2-Mercapto-benzothiazol |
| 0,5 | 0,5 | 0,5 | Gew.-% (Methyl-)Hydroxypropylcellulose |
| 0,7 | 0,5 | 0,7 | Gew.-% Xanthan |
| 1,5 | | | Gew.-% Pyrogene Kieselsäure |
| 1 | 1 | 1 | Gew.-% Bentonite |
| 3 | 1 | 1 | Gew.-% Tagat V 20 |
| 0,5 | | | Gew.-% Na-diisooctylsulfosuccinat |
| 0,5 | 2 | 2 | Gew.-% Polysorbitanester |
| 34,5 | 35,9 | 32,7 | Gew.-% Wasser |
| 5 | 5 | 5 | Gew.-% Hydroxycarbonsäure (Glykolsäure 57 %ig) |
| 12,9 | 12,9 | 12,9 | Gew.-% Wasserstoffperoxid (35 %ig) |
| 2,2 | | 1 | Gew.-% übliche Wachsemulsion |

### Beispiele 6 bis 9

Weitere erfindungsgemäße Zubereitungen hatten folgende Zusammensetzungen:

| | 6 | 7 | 8 | 9 |
|---|---|---|---|---|
| E-Wasser | 23,52 | 22,42 | 25,42 | 31,67 |
| Kelzan ASX/Xanthan | | | | 2 |
| Hydroxypropylcellulose | 0,75 | 0,75 | 0,75 | 0,5 |
| Tween 80/ Polysorbitanester | 5 5 | | 5 | 2 |
| Tagat V 20 (Emulgator) | | | | 1 |
| Cublen D 50 (Stabilisator) | 2 | 2 | 2 | 2 |
| Malonsäure | 4,2 | 6,5 | 3,5 | 4 |
| Gerbsäure | 0,4 | 0,2 | 0,2 | 0,2 |
| Bentone EW | | | | 1 |
| Wasserstoffperoxid 35 % | 14,9 | 12,9 | 12,9 | 16,9 |
| Propylenglykol | 5 5 | | 5 | 2 |
| Benzylalkohol | 35 | 35 | 35 | 29,5 |
| Mercato-Korrosionsinhibitor | 0,2 | 0,2 | 0,2 | 0,2 |
| Acetanilid | 0,03 | 0,03 | 0,03 | 0,03 |
| Diisopropylnaphthalin | | 4 | | |
| Solvesso 150/Solvent naphtha | 2 | 3 | | |
| Solvesso 200/Solvent naphtha | | | 7 | 6 |
| Isopropyllaurat | 5 | | | |
| Pyrogene Kieselsäure 200 | | 1 | 1 | |
| Paraffin-Wachs-Emulsion | 2 2 | | 2 | 1 |
| Gesamt | 100 | 100 | 100 | 100 |

### Beispiele 10 bis 16

Weitere erfindungsgemäße Zubereitungen hatten folgende Zusammensetzungen:

| | 10 | 11 | 12 | 13 | 14 | 15 | 16 |
|---|---|---|---|---|---|---|---|
| E-Wasser | 41,37 | 31.67 | 46,07 | 35,17 | 35,9 | 35,9 | 35,4 |
| Xanthan | 1 | 2 | 2 | 0,5 | 0,5 | 0,5 | 0,5 |
| Hydroxypropylcellulose | 0,5 | 0,5 | 0,5 | 0,5 | 0,5 | 0,5 | 0,5 |
| Polysorbitanester | 3 | 3 | 2 | 2 | 1 | 1 | 0,5 |
| Tagat V 20 | 1 | 1 | 1 | 1 | 2 | 2 | 3 |
| Cublen D 50 | | 1 | 2 | | | | |
| Glykolsäure 57 % | 4,4 | | | 5 | 5 | 5 | |
| Citronensäure | 1 2 3 | | | | | | |
| Malonsäure | 2,5 | 3 | | | | | |
| Bernsteinsäure | | | | | | | 5 |
| Tannin | | 0,2 | 0,2 | 0,2 | | | |
| Bentonite | | 1 | | 1 | 1 | 1 | 1 |
| Wasserstoffperoxid 35 % | 2 | 12,9 | 2 | 12,9 | 12,9 | 12,9 | 12,9 |
| Propylenglykol | 2 | 2 | 2 | 2 | 2 | 2 | 2 |
| Benzylalkohol | 28 | 29,5 | 29 | 29,5 | 30 | 30 | 30 |
| 2-Mercapto-benzothiazol | 0,2 | 0,2 | 0,2 | 0,2 | 0,2 | 0,2 | 0,2 |
| Acetanilid | 0,03 | 0,03 | 0,03 | 0,03 | | | |
| Solvent Naphtha | 10 | 9 | 9 | 9 | 9 | 9 | 9 |
| Pyrogene Kieselerde | 1 | | | | | | |
| Wachsemulsion | 2 1 1 | | | 1 | | | |
| Gesamt | 100 | 100 | 100 | 100 | 100 | 100 | 100 |

## Patentansprüche

1. Chlorkohlenwasserstofffreie Abbeizzubereitung in dickflüssiger, pastöser oder geleeartiger Form, welche wenigstens ein übliches Tensid und weinigstens ein übliches Verdickungsmittel in einem Lösungsmittelgemisch aufweist, **dadurch gekennzeichnet, daß** sie
- 25 bis 60 Gew.-% Wasser,
- 2,5 bis 50 Gew.-% aromatischen Alkohol,
- 0,2 bis 10 Gew.-% Peroxide,
und
- 0,5 bis 20 Gew.-% einer Dicarbonsäure der Formel HOOC-(CH₂)ₙ-COOH mit n = 0,1 oder 2
enthält.

2. Zubereitung nach Anspruch 1, **dadurch gekennzeichnet, daß** sie Mono-, Di- und/oder Trihydroxycarbonsäure enthält mit der Maßgabe, dass der Gehalt an Mono-, Di- und/oder Trihydroxycarbonsäure zusammen mit der Dicarbonsäure der Formel HOOC-(CH2)n-COOH mit n = 0,1 oder 2 0,5 bis 20 Gew.-% beträgt.

3. Zubereitung nach Anspruch 1 oder 2, **dadurch gekennzeichnet, daß** sie 10 bis 35 Gew.-% Benzylalkohol enthält.

4. Zubereitung nach einem der oben genannten Ansprüche, **dadurch gekennzeichnet, daß** sie zusätzlich bis zu 10 Gew.-% Glykol und/oder DMSO enthält.

5. Zubereitung nach Anspruch 4, **dadurch gekennzeichnet, daß** sie 1 bis 5 Gew.-% Propylenglykol enthält.

6. Zubereitung nach einem der vorstehenden Ansprüche, **dadurch gekennzeichnet, daß** es sich bei dem Peroxid um Wasserstoffperoxid handelt.

7. Zubereitung nach einem der vorstehenden Ansprüche, **dadurch gekennzeichnet, daß** sie zusätzlich 5 bis 30 Gew.-% teilwasserlösliche und/oder wasserunlösliche Lösemittel enthält.

8. Zubereitung nach einem der vorstehenden Ansprüche, **dadurch gekennzeichnet, daß** sie 5 bis 15 Gew.-% Solvent Naphtha oder Diisopropylnaphthalin enthält.

9. Zubereitung nach Anspruch 2, **dadurch gekennzeichnet, daß** sie eine Trihydroxycarbonsäure, vorzugsweise Gerbsäure, in einer Menge von 0,1 bis 3 Gew.-% der Zubereitung enthält.

10. Zubereitung nach einem der vorstehenden Ansprüche, **dadurch gekennzeichnet, daß** sie 0,5 bis 4 Gew.-% Verdickungsmittel enthält.

11. Zubereitung nach einem der vorstehenden Ansprüche, **dadurch gekennzeichnet, daß** die Zubereitung Hydroxypropylcellulose, Bentonite, Hydroxypropylmethylcellulose, Pektine oder Xanthan, jeweils allein oder in Kombination, als Verdickungsmittel enthält.

12. Zubereitung nach einem der vorstehenden Ansprüche, **dadurch gekennzeichnet, daß** die wässrige Tensidlösung 0,5 bis 8 Gew.-% Tenside, vorzugsweise Polysorbitanester, enthält.

13. Zubereitung nach einem der vorstehenden Ansprüche, **dadurch gekennzeichnet, daß** sie auf einen sauren pH-Wert eingestellt ist.

14. Zubereitung nach einem der vorstehenden Ansprüche, **dadurch gekennzeichnet, daß** sie Wachs in einer Menge von bis zu 2 Gew.-% enthält.

## Claims

1. A stripping preparation in viscouse, pasty or gel-like form free of chlorinated hydrocarbons which includes at least one conventional tenside and at least one conventional thickening agent in a solvent mixture, **characterised in that** it includes
- 25 to 60 % by wt. water
- 2.5 to 50% by wt. aromatic alcohol
- 0.2 to 10% by wt. peroxides
and
- 0.5 to 20% by wt. of a dicarboxylic acid with the formula HOOC-(CH₂)ₙ-COOH where n = 0, 1 or 2.

2. A preparation as claimed in Claim 1, **characterised in that** it includes mono-, di- and/or trihydroxycarboxylic acid with the proviso that the content of mono-, di- and/or trihydroxycarboxylic acid together with the dicarboxylic acid with the formula HOOC-(CH₂)ₙ-COOH where n = 0, 1 or 2 is 0.5 to 20% by wt.

3. A preparation as claimed in Claim 1 or 2, **characterised in that** it contains 10 to 35% by wt. benzyl alcohol.

4. A preparation as contained in one of the claims referred to above, **characterised in that** it additionally contains up to 10% by wt. glycol and/or DMSO.

5. A preparation as claimed in Claim 4, **characterised in that** it contains 1 to 5% by wt. propylene glycol.

6. A preparation as claimed in one of the preceding claims, **characterised in that** the peroxide is hydrogen peroxide.

7. A preparation as claimed in one of the preceding claims, **characterised in that** it additionally includes 5 to 30% by wt. partially water soluble and/or water insoluble solvents.

8. A preparation as claimed in one of the preceding claims, **characterised in that** it contains 5 to 15% by wt. naphtha solvent or di-isopropyl naphthaline.

9. A preparation as claimed in Claim 2, **characterised in that** it contains a trihydroxycarboxylic acid, preferably tannic acid, in the amount of 0.1 to 3% by wt. of the preparation.

10. A preparation as claimed in one of the preceding claims, **characterised in that** it contains 0.5 to 4% by wt. thickening agent.

11. A preparation as claimed in one of the preceding claims, **characterised in that** the preparation contains hydroxypropylcellulose, bentonite, hydroxypropylmethylcellulose, pectin or xanthan, on its own or in combination, as the thickening agent.

12. A preparation as claimed in one of the preceding claims, **characterised in that** the aqueous tenside solution contains 0.5 to 8% by wt. tensides, preferably polysorbitane ester.

13. A preparation as claimed in one of the preceding claims, **characterised in that** it is set to an acid pH value.

14. A preparation as claimed in one of the preceding claims, **characterised in that** it contains wax in an amount of up to 2% by wt.

## Revendications

1. Composition de décapage exempte d'hydrocarbure chloré de forme visqueuse, pâteuse ou de type gel qui présente au moins un tensioactif traditionnel et au moins un agent épaississant traditionnel dans un mélange de solvants, **caractérisée en ce qu'**elle contient
- de 25 à 60 % en poids d'eau
- de 2,5 à 50 % en poids d'alcool aromatique
- de 0,2 à 10 % en poids de peroxyde
et
- de 0,5 à 20 % en poids d'acide dicarboxylique de formule HOOC-(CH₂)ₙ-COOH avec n = 0,1 ou 2.

2. Composition selon la revendication 1, **caractérisée en ce qu'**elle contient un acide mono-, di- et/ou trihydroxycarboxylique à condition que la teneur en acides mono-, di- et/ou trihydroxycarboxyliques s'élève, en tenant compte de l'acide dicarboxylique de formule HOOC-(CH₂)ₙ-COOH avec n de 0,1 ou 2 de 0,5 à 20 % en poids.

3. Composition selon la revendication 1 ou 2, **caractérisée en ce qu'**elle contient 10 à 35 % en poids d'alcool benzylique.

4. Composition selon l'une quelconques des revendications citées précédemment, **caractérisée en ce qu'**elle contient en plus jusqu'à 10 % en poids de glycol et/ou de DMSO.

5. Composition selon la revendication 4, **caractérisée en ce qu'**elle contient 1 à 5 % en poids de propylène glycol.

6. Composition selon l'une quelconque des revendications précédentes, **caractérisée en ce qu'**il s'agit pour le peroxyde du peroxyde d'hydrogène.

7. Composition selon l'une quelconque des revendications précédentes, **caractérisée en ce qu'**elle contient de 5 à 30 % en poids de solvant non soluble dans l'eau ou partiellement hydrosoluble.

8. Composition selon l'une quelconque des revendications précédentes, **caractérisée en ce qu'**elle contient 5 à 15 % en poids de solvant naphta ou diisopropyl naphtaline.

9. Composition selon la revendication 2, **caractérisée en ce qu'**elle contient un acide trihydroxycarboxylique, de préférence de l'acide tannique en une quantité allant de 0,1 à 3 % en poids de la composition.

10. Composition selon l'une quelconque des revendications précédentes, **caractérisée en ce qu'**elle contient 0,5 à 4 % en poids d'agent épaississant.

11. Composition selon l'une quelconque des revendications précédentes, **caractérisée en ce que** la composition contient de l'hydroxypropylcellulose, de la bentonite, de l'hydroxypropylméthylcellulose, de la pectine ou du xanthane, à chaque fois seul ou en mélange en tant qu'agent épaississant.

12. Composition selon l'une quelconque des revendications précédentes, **caractérisée en ce que** la solution de tensioactif aqueuse contient 0,5 à 8 % en poids de tensioactif, de préférence de l'ester de polysorbitane.

13. Préparation selon l'une quelconque des revendications précédentes, **caractérisée en ce qu'**elle présente une valeur de pH acide.

14. Composition selon l'une quelconque des revendications précédentes, **caractérisée en ce qu'**elle contient de la cire dans une quantité pouvant atteindre 2 % en poids.
